## Europäisches Patentamt
## European Patent Office
## Office européen des brevets

(19)

(11) Veröffentlichungsnummer: **0 146 527**
**B1**

(12) # EUROPÄISCHE PATENTSCHRIFT

(45) Veröffentlichungstag der Patentschrift:
**10.05.89**

(51) Int. Cl.⁴: **G 02 C 5/22**

(21) Anmeldenummer: **84890217.7**

(22) Anmeldetag: **15.11.84**

(54) **Brillengelenk.**

(30) Priorität: **22.12.83 AT 4480/83**

(43) Veröffentlichungstag der Anmeldung:
**26.06.85 Patentblatt 85/26**

(45) Bekanntmachung des Hinweises auf die Patenterteilung:
**10.05.89 Patentblatt 89/19**

(84) Benannte Vertragsstaaten:
**CH DE FR GB IT LI**

(56) Entgegenhaltungen:
**DE-A-2 547 610**
**DE-A-2 906 516**
**DE-A-2 943 067**
**DE-B-1 206 171**

(73) Patentinhaber: **Schwabegger, Eduard, Ringstrasse 10, A-4600 Wels (AT)**

(72) Erfinder: **Schwabegger, Eduard, Ringstrasse 10, A-4600 Wels (AT)**

(74) Vertreter: **Hübscher, Gerhard, Dipl.- Ing., Patentanwälte Dipl.- Ing. Gerhard Hübscher Dipl.- Ing. Helmut Hübscher Dipl.- Ing. Heiner Hübscher Spittelwiese 7, A-4020 Linz (AT)**

EP 0 146 527 B1

## Beschreibung

Die Erfindung betrifft ein Brillengelenk, das aus einem Gelenkkopf mit einem parallel zur Gelenkachse angeordneten Halsansatz und einem den Gelenkkopf in Richtung der Gelenkachse umfassenden Lager besteht, wobei der Gelenkkopf beidseitig konvex geformt ist und das Lager zwei entsprechend konkave Aussparungen aufweist.

Brillenengelenke dieser Art sind bereits bekannt (DE-OS-2 906 516, DE-OS-2 943 067). Sie haben den Vorteil, daß sie keine die Gelenkachse bildende Scharnierschraube benötigen, die sich meist bei oftmaligem Schwenken des Brillenbügels lockert, weil sie bei der Bügelbewegung auf Drehung um ihre Achse beansprucht wird. Eines dieser bekannten Brillengelenke (DE-OS-2 906 516) weist jedoch einen einteiligen, mit einem Seitenschlitz zum Einführen des Gelenkkopfes versehenen Lagerkörper auf, dessen Innenraum die zwei konkaven Aussparungen für die konvexen Rotationskörperflächen des Gelenkkopfes besitzt. Dadurch ergibt sich ein überaus kompliziertes Gebilde, das sich spanabhebend aus Metall überhaupt nich fertigen läßt. Die Herstellung im Gießverfahren setzt eine sehr aufwendige Form voraus, die sich wegen ihrer geringen Größe kaum handhaben läßt. Bei der Verwendung von Kunststoff ist die notwendige Festigkeit des Lagerkörpers nicht gewährleistet. Bei dem anderen bekannten Brillengelenk (DE-OS-2 943 067) ist der aus Metall, vorzugsweise federhartem Metall, bestehende Lagerkörper etwa U-förmig gestaltet, wobei die einander zugekehrten Innenflächen der U-Schenkel die Aussparungen und Bombierungen für den Gelenkkopf aufweisen, was wiederum beträchtliche Herstellungsschwierigkeiten mit sich bringt. Dazu kommt noch, daß der Gelenkkopf ein besonders geformtes Lagerelement aus Kunststoff eingegossen hat, das den Herstellungsaufwand noch weiter erhöht. In beiden Fällen wird außerdem eine auf das fertig zusammengestellte Gelenk aufsetzbare Fixierkappe vorgeschlagen, die einen zusätzlichen komplizierten Bauteil darstellt.

Somit liegt der Erfindung die Aufgabe zugrunde, diese Mängel zu beseitigen und ein Brillengelenk der eingangs geschilderten Art zu schaffen, das bei ausreichender Festigkeit und genügender Schwergängigkeit besonders einfach und billig hergestellt werden kann.

Die Erfindung löst die gestellte Aufgabe durch die im Anspruch 1 gekennzeichneten Merkmale.

Der Gelenkkopf besteht also zunächst aus einer Ringscheibe, deren Herstellung aus Metall keinerlei Schwierigkeiten bereitet. In die Ringöffnung braucht nur eine kleine Kugel eingesetzt zu werden, z. B. eine Kugel aus der Produktion kleiner Kugellager, wobei die Kugel in der Ringscheibe keinen Festsitz benötigt, die Funktionstüchtigkeit des Gelenkes vielmehr auch dann vorliegt, wenn die Kugel in der Scheibe bloß eingelegt ist. Durch die Zweiteiligkeit des Lagers läßt sich jeder Teil für sich ohne weiteres aus Metall fertigen, womit die notwendige Haltbarkeit bzw. Festigkeit gesichert ist. Außerdem ist bei zweiteiliger und nur zusammengeschraubter Ausbildung die Gelenkmontage vereinfacht, wobei dann die Schraube eine Doppelfunktion hat, nämlich die beiden Lagerteile nicht nur zu verbinden, sondern auch zusammenzuspannen und dadurch die Reibung der Ringscheibe und der Kugel im Lager bzw. die Bremswirkung zu erhöhen.

Die beiden Lagerteile können aber auch bleibend verbunden, insbesondere verlötet, und gegebenenfalls im Aussparungsbereich elastisch auseinanderspreizbar sein. In diesem Falle werden also die beiden äußeren Gelenkteile nach ihrer Einzelfertigung bzw. nach Herstellung der Aussparungen zu einer unlösbaren Einheit verbunden, die sich leicht am Brillenbügel oder an der Brillenfassung befestigen läßt. Da die fest verbundenen äußeren Gelenkteile gegebenenfalls im Aussparungsbereich elastisch auseinanderspreizbar sind, kann der Gelenkmittelteil trotz der vorhandenen Verdickung eingebracht werden. Ist die Elastizität der beiden äußeren Gelenkteile im Aussparungsbereich zu gering, um die erforderliche Spreizweite zu gewährleisten, so ist es möglich, daß wenigstens einer der beiden bleibend verbundenen Lagerteile in seiner dem anderen Lagerteil zugekehrten Fläche eine von der konkaven Aussparung zum freien Rand verlaufende Radialnut aufweist, die einen spitzen Winkel mit der Anschlußfläche der Lagerteile an den Brillenbügel bzw. die Brillenfassung einschließt. Längs dieser Radialnut kann nun die Kugel ohne wesentliche elastische Deformation der Lagerteile in die Aussparung eingeführt werden, wobei die Winkellage dieser Radialnut so gewählt ist, daß die Kugel in den beiden Grundstellungen des Brillenbügels, also in eingeklappter und voll ausgeschwenkter Stellung nicht in die Radialnut eintreten kann.

Die gegebenenfalls vorhandene Spannschraube hat nicht nur die Aufgabe, die als Einzelteile ausgebildeten Lagerteile zu verbinden, sondern bringt auch bei verlöteten oder in sonstiger Weise bleibend verbundenen Lagerteilen einen Vorteil, der darin besteht, daß man die beiden Lagerteile zusammen- bzw. gegen die Ringscheibe ziehen kann, wenn die Reibung der Kugel in den Aussparungen bzw. der Ringscheibe zwischen den Lagerteilen einmal nachgelassen hat.

In der Zeichnung ist der Erfindungsgegenstand beispielsweise dargestellt, und zwar zeigen

Fig. 1  ein Brillengelenk im Vertikalschnitt nach der Linie I - I der Fig. 2,

Fig. 2  eine Draufsicht bei abgenommenem, oberem Lagerteil,

Fig. 3  die beiden zu einer Einheit verlöteten Lagerteile in Ansicht und

Fig. 4  den unteren Lagerteil für sich allein in Draufsicht.

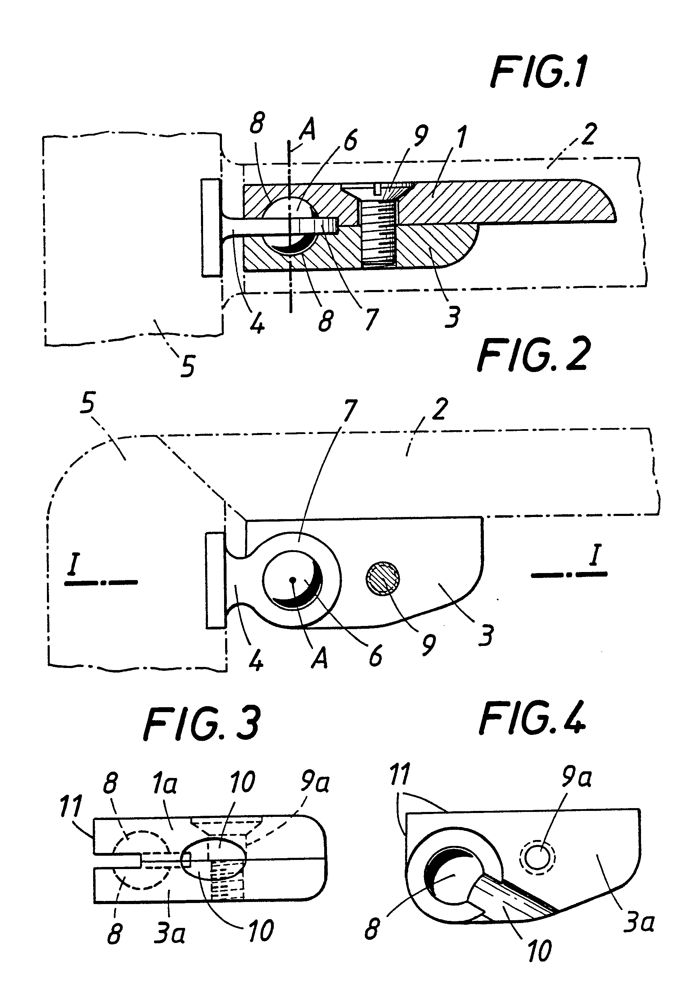

Gemäß den Fig. 1 und 2 weist das erfindungsgemäße Brillengelenk einen oberen Lagerteil 1 auf, der in geeigneter Weise am Brillenbügel 2 befestigt ist, ferner einen unteren Lagerteil 3, der keine unmittelbare Verbindung mit dem Brillenbügel 2 besitzt, und einen Gelenkkopf 4, der an der Brillenfassung 5 gehalten ist. Der Gelenkkopf 4 weist eine einen Rotationskörper um die Gelenkachse A bildende Kugel 6 auf, die in einer mit einem Halsansatz versehenen äquatorialen Ringscheibe 7 eingesetzt ist.

In den beiden Lagerteilen 1 und 3 ist jeweils eine der Kugelform an der betreffenden Äquatorseite angepaßte, also nach einer Kugelkalotte geformte Aussparung 8 zur Aufnahme der Kugel 6 vorgesehen. Der untere Lagerteil 3 wird erst nach dem Zusammenfügen der drei Gelenkteile 1, 3, 4 mittels einer Spannschraube 9 am oberen Lagerteil 1 befestigt.

Nach den Fig. 3 und 4 sind die beiden Lagerteile 1a, 3a zu einer Einheit verlötet. Der Gelenkkopf 4 mit seiner Kugel 6 wird durch elastisches Auseinanderspreizen der beiden Lagerteile 1a, 3a eingeführt, wobei zur Erleichterung des Einführens in den einander zugekehrten Flächen der Lagerteile 1a, 3a eine von der Aussparung 8 zum freien Rand verlaufende Radialnut 10 vorgesehen ist, die einen spitzen Winkel mit den Anschlußflächen 11 der Lagerteile 1a, 3a an den Brillenbügel bzw. die Brillenfassung einschließt. Obwohl hier die beiden Lagerteile 1a, 3a zu einer Einheit bleibend verbunden sind, kann eine Spannschraube (Bohrung 9a) von Vorteil sein.

Selbstverständlich können die Gelenkteile 1, 3, 4 bzw. 1a, 3a auch anders gestaltet sein. Die Befestigung am Brillenbügel oder an der Brillenfassung kann beliebiger-Weise erfolgen. Das erfindungsgemäße Gelenk ist sowohl für Brillen mit Kunststoffgestell als auch für solche mit metallischer Fassung und/oder metallischen Bügeln geeignet.

## Patentansprüche

1. Brillengelenk, bestehend aus einem Gelenkkopf (4) mit einem parallel zur Gelenkachse (A) angeordneten Halsansatz und einem den Gelenkkopf (4) in Richtung der Gelenkachse (A) umfassenden Lager (1, 3; 1a), wobei der Gelenkkopf (4) beidseitig konvex geformt ist und das Lager zwei entsprechend konkave Aussparungen (8) aufweist, dadurch gekennzeichnet, daß der Gelenkkopf (4) von einer Ringscheibe (7) mit eingesetzter Kugel (6) gebildet ist und das Lager aus zwei gegebenenfalls bleibend verbundenen Teilen (1, 3; 1a, 3a) mit der Kugel (6) entsprechenden Aussparungen (8) und Teilung nach der Äquatorebene besteht.

2. Brillengelenk nach Anspruch 1 oder 2, dadurch gekennzeichnet, daß die beiden Lagerteile (1, 3; 1a, 3a) mittels einer mit Abstand von der Gelenkachse (A) aber parallel zu dieser angeordneten Schraube (9) od. dgl. zusammenspannbar sind.

3. Brillengelenk nach Anspruch 1 oder 2, dadurch gekennzeichnet, daß wenigstens einer der beiden bleibend verbundenen Lagerteile (1a, 3a) in seiner dem anderen Lagerteil zugekehrten Fläche eine von der konkaven Aussparung (8) zum freien Rand verlaufende Radialnut (10) aufweist, die einen spitzen Winkel mit der Anschlußfläche (11) der Lagerteile (1a, 3a) an den Brillenbügel bzw. die Brillenfassung einschließt.

## Claims

1. A hinge for eyeglasses, comprising a hinge head (4) provided with a neck, which is parallel to the pivotal axis (A) of the hinge, and a bearing (1, 3), which embraces the hinge head (4) in the direction of said pivotal axis (A), wherein said hinge head (4) is convexly shaped on both sides and the bearing has two complementary concave recesses (8), characterized in that the hinge head (4) consists of an annular disc (7), which is provided with an inserted ball (6), and the bearing consists of two parts (1, 3; 1a, 3a), which are optionally permanently connected and which have a parting plane in the equatorial plane and are formed with recesses (8) conforming to the ball (6).

2. A hinge for eyeglasses according to claim 1 or 2, characterized in that the two bearing parts (1, 3; 1a, 3a) are adapted to be forced against each other by means of a screw (9) or the like, which is spaced from and parallel to the pivotal axis (A) of the hinge.

3. A hinge for eyeglasses according to claim 1 or 2, characterized in that at least one of the two bearing parts (1a, 3a) which are permanently joined is formed in that surface which faces the other bearing part with a radial groove (10), which extends from the concave recess (8) to the free edge and includes an acute angle with the surface (11) at which the bearing elements (1a, 3a) are intended to contact the bow or rim of the eyeglasses.

## Revendications

1. Joint articulé pour lunettes, se composant d'une tête (4) d'articulation avec un bout en collet prévu parallèle à l'axe (A) d'articulation et un palier (1, 3) embrassant la tête (4) d'articulation dans le sens de l'axe d'articulation (A), la tête (4) d'articulation ayant des deux côtés une configuration convexe et le palier présentant deux évidements (8) concaves en conséquence, caractérisé par le fait que la tête (4) d'articulation est formée par un disque annulaire (7) avec sphère (6) encastrée et que le palier se compose de deux parties (1, 3; 1a, 3a) demeurant le cas échéant reliées entre elles et comportant des évidements (8) correspondant à la sphere (6).

2. Joint articulé pour lunettes suivant la revendication 1, caractérisé par le fait que les deux parties (1, 3; 1a, 3a) du palier peuvent être serrées ensemble au moyen d'une vis (9) ou similaire prévue à distance de l'axe (A) d'articulation, mais parallèlement à ce dernier.

3. Joint articulé pour lunettes suivant la revendication 1 ou 2, caractérisé par le fait que l'une au moins des deux parties (1a, 3a) de palier demeurant reliées entre elles présente, dans sa face orientée vers l'autre partie de palier, une rainure (10) radiale qui, s'étendant depuis l'évidement concave (8) jusqu'au bord libre, forme un angle aigu avec la face (11) de raccordement des parties (1a, 3a) du palier à la branche ou à la monture des lunettes.

## FIG.1

## FIG.2

## FIG.3

## FIG.4